# EUROPÄISCHE PATENTSCHRIFT

(11) **EP 2 531 367 B1**
(45) Veröffentlichungstag und Bekanntmachung des Hinweises auf die Patenterteilung: **19.10.2016**
(21) Anmeldenummer: 10718867.4
(22) Anmeldetag: 19.04.2010
(51) Int. Cl.: B60L 11/18, H02J 3/32

(54) **VORRICHTUNG UND VERFAHREN ZUM SPEICHERN ELEKTRISCHER ENERGIE**
DEVICE AND METHOD FOR STORING ELECTRICAL ENERGY
PROCÉDÉ ET DISPOSITIF D'ACCUMULATION D'ÉNERGIE ÉLECTRIQUE

(43) Veröffentlichungstag der Anmeldung: 12.12.2012
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2010/002388
(87) Internationale Veröffentlichungsnummer: WO 2011/131209

(56) Entgegenhaltungen:
- WO-A1-2005/009779
- US-A1- 2004 026 140
- US-A1- 2006 220 601

## Beschreibung

Die Erfindung betrifft eine Vorrichtung und ein Verfahren zum Speichern elektrischer Energie in Fahrzeugakkumulatoren von Fahrzeugen.

Fahrzeuge werden zunehmend mit Elektromotoren angetrieben. Dazu wird elektrische Ladung bzw. elektrische Energie in einem Fahrzeugakkumulator geladen, welcher Verbrauchseinheiten, insbesondere einen Elektromotor des Fahrzeugs, im Fahrbetrieb des Fahrzeugs mit Strom versorgt. In das öffentliche Stromnetz wird zunehmend auch Energie bzw. Strom eingespeist, der von Windkraftanlagen stammt. Daher ist die in dem Stromnetz zur Verfügung stehende Leistung Schwankungen ausgesetzt, die von der Menge des eingespeisten Windstromes abhängen. Um derartige Stromschwankungen abzubauen, ist es notwendig, diese Stromschwankungen in separaten Stromspeichern, die an dem Stromnetz angeschlossen sind, abzupuffern bzw. überflüssigen Strom zwischenzuspeichern.

Es wurde daher vorgeschlagen, Fahrzeuge als mobile Stromspeicher einzusetzen; wie in Pictures of the Future, Herbst 2009, Seite 44-46 "Elektroauto im Smartgrid" berichtet (http://wl.siemens.com/innovation/de/publikationen/pof herbst 2009/energie/ecar.htm), wobei angedacht ist, Fahrzeuge in einem öffentlichen Stromnetz elektrisch zu betanken, um Windstrom aufzunehmen. Ist dabei die Nachfrage nach Strom in dem Stromnetz hoch, wird aus den Fahrzeugen Strom in das Stromnetz zurückgespeist. Die Fahrzeuge dienen somit dazu, Schwankungen, die beispielsweise durch Windstrom entstehen, auszugleichen. Die Fahrzeugakkumulatoren der Fahrzeuge stellen ihre Speicherkapazität dem Stromnetz zur Verfügung, um Strom bzw. Leistungsschwankungen zu puffern.

Ein Nachteil dieser herkömmlichen Speichervorrichtungen besteht allerdings darin, dass der Fahrzeughalter keine vollständige Kontrolle über den Ladezustand des in seinem Fahrzeug enthaltenen Fahrzeugakkumulators hat. Wird beispielsweise der Fahrzeugakkumulator des an dem Stromnetz angeschlossenen Elektrofahrzeugs des Fahrzeughalters aufgrund einer hohen Nachfrage nach Strom in dem Netz entladen, kann die in dem Akkumulator des Elektrofahrzeugs verbliebene elektrische Ladung unter Umständen für die Zwecke des Fahrzeughalters nicht mehr ausreichend sein. Will beispielsweise der Fahrzeughalter bzw. Fahrer von der Stromzapfsäule, mit der das Elektrofahrzeug an das Stromnetz angeschlossen ist, wegfahren, um zu einem Zielort zu gelangen, kann es vorkommen, dass aufgrund der Entladung des Fahrzeugakkumulators, die infolge der hohen Stromnachfrage im Stromnetz vorgenommen wurde, die verbliebene in dem Elektroakkumulator gespeicherte elektrische Energie bzw. gespeicherte Ladung nicht mehr ausreicht, um den Zielort zu erreichen. In diesem Fall wäre der Fahrer gezwungen, den Fahrzeugakkumulator vor Antritt der Fahrt aufzuladen, wobei dafür eine gewisse, nicht unerhebliche Ladezeit benötigt wird. In diesem Falle ist der Fahrer somit gezwungen zu warten bis der Fahrzeugakkumulator den notwendigen Ladezustand erreicht bevor er zu dem Zielort losfahren kann.

Weiterhin ist aus WO2005/009779 A1 bekannt bei einem Elektrofahrzeug einen bestimmten Anteil der Energie im Fahrzeugenergiespeicher zu reservieren, so dass dieser nicht vom Energieversorger entladen werden kann.

Es ist daher eine Aufgabe der vorliegenden Erfindung, eine Vorrichtung und ein Verfahren zum Speichern elektrischer Energie in einem Fahrzeug zu schaffen, das einerseits erlaubt, überschüssige Energie aus dem Stromnetz in die Speichervorrichtung zwischenzuspeichern und andererseits dem Fahrer die vollständige Kontrolle über den Fahrzeugakkumulator des Fahrzeugs belässt.

Die Erfindung schafft eine Vorrichtung zum Speichern elektrischer Energie in einem Fahrzeug mit einem Fahrzeugakkumulator, der über eine Ladeschnittstelle des Fahrzeugs an ein Stromnetz anschließbar ist und eine Speicherkapazität zum Speichern elektrischer Energie aufweist,
wobei die Speicherkapazität des Fahrzeugakkumulators für unterschiedliche Nutzer partitioniert ist.

Bei einer Ausführungsform der erfindungsgemäßen Vorrichtung ist zwischen dem Fahrzeugakkumulator und der Ladeschnittstelle des Fahrzeugs ein Energiemanagementmodul vorgesehen, welches die Speicherkapazität des Fahrzeugakkumulators in verschiedene Nutzer-Speicherkapazitäten partitioniert.

Bei einer Ausführungsform der erfindungsgemäßen Vorrichtung wird durch das Energiemanagementmodul die Speicherkapazität des Fahrzeugakkumulators logisch in verschiedene Nutzer-Speicherkapazitäten partitioniert.

Bei einer möglichen Ausführungsform der erfindungsgemäßen Vorrichtung adressiert das Energiemanagementmodul verschiedene Energiespeicherzellen des Fahrzeugakkumulators.

Bei einer Ausführungsform der erfindungsgemäßen Vorrichtung ist jede Nutzer-Speicherkapazität des Fahrzeugakkumulators über das Energiemanagementmodul unabhängig von anderen Nutzer-Speicherkapazitäten des Fahrzeugakkumulators über die Ladeschnittstelle auf- und entladbar.

Bei einer Ausführungsform der erfindungsgemäßen Vorrichtung weisen die Nutzer-Speicherkapazitäten mindestens eine erste Speicherkapazität zur Speicherung elektrischer Energie für das Fahrzeug und eine zweite Speicherkapazität zur Zwischenspeicherung von Energie für einen Stromanbieter auf.

Bei einer Ausführungsform der erfindungsgemäßen Vorrichtung ordnet das Energiemanagementmodul die Nutzer-Speicherkapazitäten verschiedenen Nutzern zu, wobei die Nutzer verschiedene Verbrauchseinheiten des Fahrzeuges, welche elektrische Energie verbrauchen,
verschiedene Personen, welche das Fahrzeug fahren, und verschiedene Stromanbieter, welche elektrische Energie in dem Fahrzeugakkumulator des Fahrzeuges Zwischenspeichern, aufweist.

Bei einer Ausführungsform der erfindungsgemäßen Vorrichtung weist jede partitionierte Nutzer-Speicherkapazität des Fahrzeugakkumulators
eine einstellbare virtuelle Speicherkapazität,
eine Partitionierungsidentität und
einen Ladezustand auf.

Bei einer Ausführungsform der erfindungsgemäßen Vorrichtung überwacht das Energiemanagementmodul den jeweiligen Ladezustand der Nutzer-Speicherkapazitäten des Fahrzeugakkumulators.

Bei einer Ausführungsform der erfindungsgemäßen Vorrichtung ist die Ladeschnittstelle des Fahrzeugs an eine Elektrozapfsäule des Stromnetzes zum Laden und Entladen der partitionierten Nutzer-Speicherkapazitäten des Fahrzeugakkumulators anschließbar.

Bei einer möglichen Ausführungsform der erfindungsgemäßen Vorrichtung authentisiert sich das Energiemanagementmodul des Fahrzeugs gegenüber der Elektrozapfsäule des Stromnetzes.

Bei einer Ausführungsform der erfindungsgemäßen Vorrichtung weist das Fahrzeug mindestens einen Elektromotor auf, dessen Motorsteuerung über das Energiemanagementmodul in einem Fahrbetrieb des Fahrzeugs elektrische Energie aus einer zugehörigen partitionierten Speicherkapazität des Fahrzeugakkumulators, die für die Versorgung des Elektromotors vorgesehen ist, bezieht.

Bei einer Ausführungsform der erfindungsgemäßen Vorrichtung wird bei einem Bremsvorgang des Fahrzeuges durch den Elektromotor elektrische Energie in die zugehörige partitionierte Speicherkapazität des Fahrzeugakkumulators, die für die Versorgung des Elektromotors vorgesehen ist, zurückgespeist.

Die Erfindung schafft ferner ein Energiespeichersystem mit einer Vielzahl von Speichervorrichtungen zum Speichern elektrischer Energie in einem Fahrzeug,
wobei jedes Fahrzeug mindestens einen Fahrzeugakkumulator aufweist, der über eine Ladeschnittstelle des Fahrzeugs an ein Stromnetz anschließbar ist und eine Speicherkapazität zum Speichern elektrischer Energie aufweist,
wobei die Speicherkapazität des Fahrzeugakkumulators für unterschiedliche Nutzer partitioniert ist,
wobei das Stromnetz von mindestens einem Stromanbieter mit elektrischer Energie versorgt wird und die in dem Stromnetz vorhandene elektrische Energie durch den Stromanbieter in partitionierten Speicherkapazitäten der Fahrzeugakkumulatoren zwischenspeicherbar ist.

Die Erfindung schafft ferner ein Verfahren zum Speichern elektrischer Energie, die in einem Stromnetz durch mindestens einen Stromanbieter bereitgestellt wird,
wobei die bereitgestellte elektrische Energie in dafür vorgesehene partitionierte Speicherkapazitäten von an das Stromnetz anschließbaren Fahrzeugakkumulatoren zumindest teilweise zwischengespeichert wird.

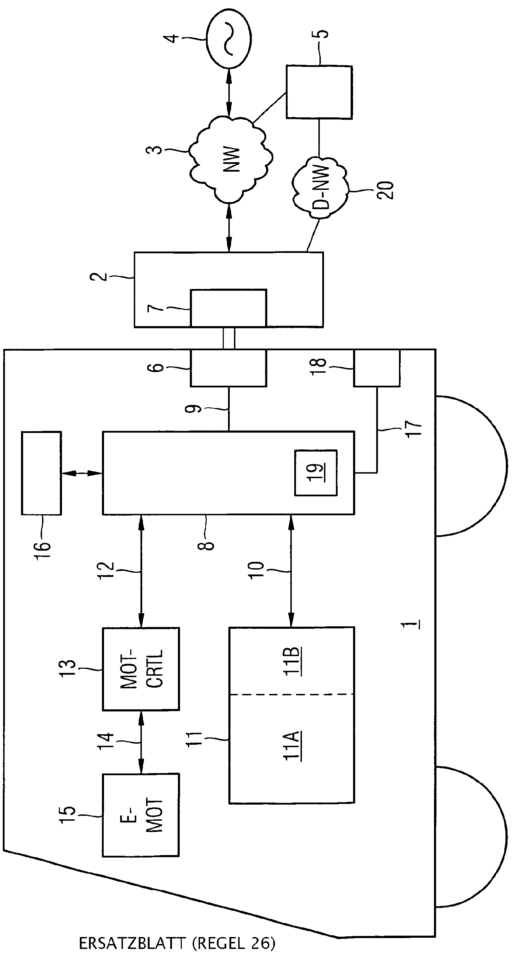

Im weiteren wird eine bevorzugte Ausführungsform der erfindungsgemäßen Vorrichtung zum Speichern elektrischer Energie und des entsprechenden Verfahrens zum Speichern elektrischer Energie unter Bezugnahme auf die beigefügte Figur beschrieben.

Wie man aus der Figur erkennen kann, ist ein Fahrzeug 1 an eine Elektrozapfsäule 2 eines Stromnetzwerkes 3 anschließbar. Bei dem dargestellten Fahrzeug 1 handelt es sich um ein Kraftfahrzeug, nämlich ein Automobil. Alternativ kann es sich bei dem Fahrzeug 1 um andere Typen von Fahrzeugen handeln, insbesondere elektrisch angetriebene Züge oder Elektrowagen, wie sie beispielsweise auf Golfplätzen eingesetzt werden. Bei dem Stromnetz 3 handelt es sich beispielsweise um ein öffentliches Stromnetz eines Stromanbieters, in das über einen oder mehrere Stromgeneratoren 4 Strom bzw. elektrische Energie eingespeist wird. Der zugehörige Stromanbieter hat beispielsweise einen eigenen Server 5, der über das Strom-Netzwerk 3 oder ein separates Datennetzwerk mit der Stromzapfsäule 2 kommuniziert. Das Stromnetzwerk 3 kann eine Vielzahl von daran angeschlossenen Elektrozapfsäulen 2 aufweisen. Des Weiteren kann eine Vielzahl von unterschiedlichen Stromgeneratoren 4 an dem Stromnetzwerk 3 angeschlossen sein, beispielsweise Windkraftanlagen. Bei dem Stromnetzwerk 3 handelt es sich beispielsweise um ein Stromnetz, das eine Wechselspannung bzw. einen Wechselstrom für den Verbraucher zur Verfügung stellt. Das Fahrzeug 1 weist eine Fahrzeug-Ladeschnittstelle 6 auf, die an eine entsprechende Ladeschnittstelle 7 der Elektrozapfsäule 2 anschließbar ist. Beispielsweise handelt es sich bei einer Ladeschnittstelle 6 um einen Stecker, der in eine entsprechende Steckdose 7 einsteckbar ist. Alternativ kann die Ladeenergie beim Aufladen des Fahrzeugs 1 und/oder beim Zurückspeisen in das Stromnetz 1 zwischen der Fahrzeug-Ladeschnittstelle 6 und der Ladeschnittstelle 7 der Elektrozapfsäule 2 induktiv übertragen werden. Die Ladeschnittstelle 6 des Elektrofahrzeugs 1 ist, wie in der Figur dargestellt, an ein in dem Fahrzeug 1 enthaltenes Energiemanagementmodul 8 angeschlossen. Das Energiemanagementmodul 8 ist über eine Leitung 9 mit der Ladeschnittstelle 6 des Fahrzeugs verbunden. Darüber hinaus ist das Energiemanagementmodul 8 über eine Leitung 10 an einen Fahrzeugakkumulator 11 des Fahrzeuges angeschlossen. Der Fahrzeugakkumulator 11 des Fahrzeugs weist eine bestimmte Speicherkapazität zum Speichern elektrischer Energie bzw. zum Speichern elektrischer Ladung. Bei der erfindungsgemäßen Speichervorrichtung ist die Speicherkapazität des Fahrzeugakkumulators 11 für unterschiedliche Nutzer partitioniert. Bei dem in der Figur dargestellten Beispiel ist die Speicherkapazität des Fahrzeugakkumulators 11 an eine erste Speicherkapazität 11A und in eine zweite Speicherkapazität 11B partitioniert. Das Energiemanagementmodul 8 des Fahrzeuges 1 ist über eine Leitung 12 mit einer Motorsteuerung 13 verbunden, die ihrerseits über Leitungen 14 einen in dem Fahrzeug 1 enthaltenen Elektromotor 15 ansteuert. Bei einer möglichen Ausführungsform ist das Energiemanagementmodul 8 über eine Konfigurationsschnittstelle 16 durch einen Nutzer konfigurierbar. Bei dem Nutzer kann es sich beispielsweise um den Fahrer des Fahrzeugs 1 handeln. Bei einer möglichen Ausführungsform erfolgt die Partitionierung des Fahrzeugakkumulators 11 in verschiedene Nutzer-Speicherkapazitäten logisch durch das Energiemanagementmodul 8. Beispielsweise kann die Separierung bzw. Partitionierung auf logischer Ebene realisiert werden, indem gegenüber der Ladeeinheit bzw. der Elektrozapfsäule 2 durch das Energiemanagementmodul 8 mehrere virtuelle Nutzer-Speicherkapazitäten auf logischer Ebene zur Verfügung gestellt werden. Dabei verfügt der Fahrzeugakkumulator 11 über eine elektrische Schnittstelle, über die er physikalisch geladen und entladen werden kann, wobei der Fahrzeugakkumulator 11 jedoch bezüglich seinem Energiemanagement, das heißt bezüglich seines Ladestatus, seiner Speicherkapazität, seiner Identität sowie beispielsweise bezüglich der jeweiligen Stromabrechnung mehrere separate Akkumulatoren bzw. Speicherkapazitäten repräsentiert. Diese logische Aufteilung des Fahrzeugakkumulators 11 kann bei einer Ausführungsform komplett über das fahrzeugeigene Energiemanagementmodul 8 realisiert werden. Dabei werden Speicherkapazitäten als virtuelle Akkumulatoren bzw. Nutzer-Speicherkapazitäten definiert, die nach außen für Einheiten unabhängig voneinander zum Speichern von elektrischer Leistung angeboten werden. Diese äußeren Einheiten sind sowohl Stromverbrauchseinheiten als auch Stromanbieter bzw. Stromerzeugungseinheiten.

Bei einer möglichen Ausführungsform können Energiespeicherzellen des Fahrzeugakkumulators 1 einzeln adressiert und zusammengefasst werden. Damit ist es möglich, ein beliebiges Array bzw. Feld von Akkumulatorzellen zu einem dem Fahrzeughalter direkt zugeordneten Fahrzeugakkumulator 11 mit mehreren virtuellen Speicherakkumulatoren zusammenzufassen. Ein Vorteil hierbei ist, dass bei Ausfall einzelner Energiespeicherzellen des Fahrzeugakkumulators 11 die Nutzer-Speicherkapazität des dem Fahrzeughalter zugeordneten Fahrzeugakkumulators 11 konstant gehalten werden kann durch Umkonfiguration bzw. Um-Mappen der Zellenzuordnung.

Bei dem in der Figur dargestellten Ausführungsbeispiel ist der Fahrzeugakkumulator 11 in zwei separate Nutzer-Speicherkapazitäten 11A, 11B partitioniert. In anderen Ausführungsformen kann der Fahrzeugakkumulator 11 in eine größere Anzahl von Nutzer-Speicherkapazitäten partitioniert sein. In dem Energiemanagementmodul 8 kann eine Zuordnungs- bzw. Mappingtabelle gespeichert sein, die physikalische Speicherbereiche verschiedenen Nutzer-Speicherkapazitäten zuweist, wobei diesen wiederum verschiedene Verbrauchseinheiten oder Stromanbieter zugeordnet sind. Jede Nutzer-Speicherkapazität 11-i des Fahrzeugakkumulators 11 ist dabei unabhängig von anderen Nutzer-Speicherkapazitäten des gleichen Fahrzeugakkumulators 11 über die Ladeschnittstelle 6, 7 auf- und entladbar. In einer Variante ist eine erste Nutzer-Speicherkapazität 11-i über die Ladeschnittstelle 6, 7 sowohl aufladbar wie auch entladbar, wogegen eine zweite Nutzer-Speicherkapazität 11-i über die Ladeschnittstelle 6,7 nur aufladbar, jedoch nicht entladbar ist. Bei dem in der Figur dargestellten Beispiel weist der Fahrzeugakkumulator 11 zwei Nutzer-Speicherkapazitäten 11A, 11B auf. Dabei kann die erste Speicherkapazität 11A zur Speicherung von elektrischer Energie für das Fahrzeug 1 vorgesehen sein und die zweite Speicherkapazität 11B zum Zwischenspeichern von Energie für eine Stromanbieter. Beispielsweise kann die Nutzer-Speicherkapazität 11A zur Stromversorgung des Elektromotors 15 innerhalb des Fahrzeugs 1 während eines Fahrbetriebs des Fahrzeugs 1 vorgesehen sein. Die zweite Speicherkapazität 11B ist beispielsweise zum Zwischenspeichern von Energie für einen Stromanbieter des Stromnetzwerkes 3 vorgesehen.

Bei einer möglichen Ausführungsform weisen die unterschiedlichen partitionierten Nutzer-Speicherkapazitäten 11A, 11B des Fahrzeugakkumulators 11 konfigurierbare bzw. einstellbare Speicherkapazitäten auf. Beispielsweise können 80% der physikalischen Speicherkapazität C des Fahrzeugakkumulators 11 der ersten Nutzer-Speicherkapazität 11A und 20% der physikalischen Speicherkapazität des Fahrzeugakkumulators 11 der zweiten Nutzer-Speicherkapazität 11B zugeordnet sein. Die Zuweisung bzw. Zuordnung von physikalischer Speicherkapazität C zu verschiedenen Nutzer-Speicherkapazitäten von verschiedenen Nutzern kann beispielsweise über die Nutzer-Schnittstelle 16 erfolgen. Bei einer möglichen Ausführungsform geschieht diese Konfiguration durch einen Techniker in einer Fahrzeuggarage oder bei dem Fahrzeughersteller. Bei einer möglichen Ausführungsform weisen die verschiedenen partitionierten Nutzer-Speicherkapazitäten jeweils die gleiche Speicherkapazität Cₚₐᵣₜ zum Speichern elektrischer Energie auf. Alternativ können die Speicherkapazitäten der partitionierten Nutzer-Speicherkapazitäten individuell voneinander abweichen.

Die Nutzer-Speicherkapazitäten 11A, 11B können verschiedenen Arten von Nutzern zugeordnet sein. Bei einer möglichen Ausführungsform werden die Nutzer-Speicherkapazitäten 11-i verschiedenen Verbrauchseinheiten innerhalb des Fahrzeugs 1 zugeordnet, welche Strom bzw. elektrische Energie verbrauchen, beispielsweise dem Elektromotor 15 oder auch andere Verbrauchseinheiten wie z.B. einer Sitzheizung, einer Heckscheibenheizung oder einem Autoradio. Bei einer weiteren möglichen Ausführungsform können die Nutzer-Speicherkapazitäten 11-i verschiedenen Personen zugeordnet sein, welche das Fahrzeug 1 fahren. Beispielsweise kann eine erste Nutzer-Speicherkapazität dem Fahrzeughalter des Fahrzeugs 1 zugeordnet sein, während andere Nutzer-Speicherkapazitäten anderen Familienmitgliedern, beispielsweise der Ehefrau oder erwachsenen Kindern des Fahrzeughalters zugeordnet sind. Weiterhin kann es sich bei den verschiedenen Nutzern um verschiedene angestellte Fahrer eines Transportunternehmens handeln. Weiterhin können einige der Nutzer-Speicherkapazitäten des Fahrzeugakkumulators 11 verschiedenen Stromanbietern zugewiesen sein, welche elektrische Energie in das Stromnetz 3 einspeisen. Die physikalisch vorhandene Speicherkapazität des Fahrzeugakkumulators 11 kann somit auf mehrere Nutzer aufgeteilt bzw. partitioniert werden. Die Partitionierung bzw. die Aufteilung der physikalischen Speicherkapazität des Fahrzeugakkumulators 11 kann fest vorgegeben sein, aber auch in einem Fahrzeugbetrieb des Fahrzeugs 1 änderbar sein. Bei einer möglichen Ausführungsform kann während des Fahrbetriebs eine Verschiebung von Akkumulatorkapazitäten erfolgen. Die verschiedenen virtuellen Akkumulatorkapazitäten bzw. Nutzer-Speicherkapazitäten des Fahrzeugakkumulators 11 werden durch das Energiemanagementmodul 8 vorzugsweise separat verwaltet, insbesondere hinsichtlich ihres jeweiligen Ladezustandes. Dies bedeutet, dass die verschiedenen Nutzer-Speicherkapazitäten durch das Energiemanagementmodul 8 separat geladen und entladen werden können.

Bei einer möglichen Ausführungsform erfolgt eine Stromnutzung und die zugehörige Stromabrechnung abhängig davon, in welchem virtuellen Akkumulator bzw. in welcher Nutzer-Speicherkapazität 11-i die jeweils verbrauchte elektrische Energie bzw. Leistung gespeichert ist, wieviel von der gespeicherten Energie genutzt bzw. verbraucht wird, wieviel von der gespeicherten elektrischen Energie beispielsweise durch parasitäre Entladevorgänge verfällt und wieviel von der in der Nutzer-Speicherkapazität geladenen Energie zurück in das Stromnetz gespeist wird.

Jede partitionierte Nutzer-Speicherkapazität 11-i des Fahrzeugakkumulators 11 weist vorzugsweise eine einstellbare virtuelle Speicherkapazität Cₚₐᵣₜ, eine Partitionierungsidentität PART-ID sowie einen entsprechenden Ladezustand L auf. Bei einer bevorzugten Ausführungsform überwacht das Energiemanagementmodul 8 den jeweiligen Ladezustand L einer Nutzer-Speicherkapazität 11A, 11B des Fahrzeugakkumulators 11. Beispielsweise kann das Energiemanagementmodul 8 erkennen, dass die Nutzer-Speicherkapazität 11A vollständig aufgeladen ist, während die andere Nutzer-Speicherkapazität 11B des Fahrzeugakkumulators 11 nur noch zu 10% geladen ist. Zur Überwachung des Ladezustands L der Nutzer-Speicherkapazitäten weist das Energiemanagementmodul 8 vorzugsweise eine Strommesseinrichtung auf, die den in den verschiedenen Nutzer-Speicherkapazitäten geladenen Strom bzw. die darin geladene Ladung erfasst. Bei einer möglichen Ausführungsform kann das Energiemanagementmodul 8 ein virtuelles Umladen von einer ersten Nutzer-Speicherkapazität 11i zu einer zweiten Nutzer-Speicherkapazität 11i innerhalb des gleichen Fahrzeugakkumulators 11 durchführen.

Bei der in der Figur dargestellten Ausführungsform befindet sich das Fahrzeug 1 in einem Parkzustand und ist über die Ladeschnittstellen 6, 7 an die Elektrozapfsäule 2 des Stromnetzwerkes 3 angeschlossen. In diesem Parkzustand können verschiedene partitionierte Nutzer-Speicherkapazitäten 11A, 11B des Fahrzeugakkumulators 11 entsprechend der Konfiguration aufgeladen werden. Weiterhin ist es möglich, dass ein Stromanbieter 3 überschüssige Energie bzw. überschüssigen Strom, beispielsweise Windstrom, in einer oder mehrere partitionierte Nutzer-Speicherkapazitäten des Fahrzeugakkumulators 11 zwischenspeichert. Während des Parkzustandes des Fahrzeuges 1 kann die von dem Energieanbieter zwischengespeicherte Energie durch Entladung der entsprechenden partitionierten Nutzer-Speicherkapazität des Stromanbieters durch den Stromanbieter wieder aus dem Fahrzeugakkumulator 11 entnommen werden.

Zum Losfahren des Fahrzeugs 1 trennt der Fahrer des Fahrzeugs 1 die Ladeschnittstelle 6 des Fahrzeugs 1 von der Elektrozapfsäule 2 und setzt den Elektromotor 15 in Gang. Die Motorsteuerung 13 versorgt den Elektromotor 15 während des Fahrbetriebs mit Strom, der aus einer zugehörigen partitionierten Speicherkapazität des Fahrzeugakkumulators 11 bezogen wird. Bei einer möglichen Ausführungsform wird während eines Bremsvorgangs des Fahrzeuges 1 durch die Motorsteuerung 13 Energie in den Fahrzeugakkumulator 11 zurückgespeist.

Mit der erfindungsgemäßen Vorrichtung ist es möglich, dass elektrische Energie in dem Fahrzeugakkumulator 11 zwischengeparkt bzw. zwischengespeichert wird, wobei diese zwischengespeicherte elektrische Energie nicht dem Fahrzeug 1 bzw. dessen Fahrzeughalter gehört. Dies bedeutet, dass die zwischengespeicherte Energie durch den Fahrzeugnutzer bzw. das Fahrzeug noch nicht genutzt werden darf. Bei einer möglichen Ausführungsform erfolgt bei Bedarf ein virtuelles Umladen der zwischengespeicherten Energie in eine andere Nutzer-Speicherkapazität des Fahrzeugakkumulators 11, die dann durch eine Verbrauchseinheit des Fahrzeugs 1 nutzbar ist. Bei einer möglichen Ausführungsform wird zusätzlich durch das Energiemanagementmodul 8 Abrechnungsdaten erzeugt, die dem Stromanbieter bzw. den Stromanbietern zur Verfügung gestellt werden.

Bei einer möglichen Ausführungsform ist das Energiemanagementmodul 8 des Fahrzeuges 1 an ein Mobilfunkmodul 18 des Fahrzeugs 1 über eine Leitung 17 angeschlossen. Dieses Mobilfunkmodul 18 kann über eine entsprechende Infrastruktur beispielsweise mit dem Server 5 des Stromanbieters kommunizieren. Bei einer möglichen Ausführungsform überträgt das Mobilfunkmodul 18 Abrechnungsinformationsdaten des Energiemanagementmoduls 8 an einen Server 5 des Stromanbieters bzw. Stromnetzbetreibers. Bei einer alternativen Ausführungsform können entsprechende Abrechnungsinformationsdaten oder auch andere Daten, wie beispielsweise Daten bezüglich des Ladezustandes der verschiedenen Nutzer-Speicherkapazitäten, über die Ladeschnittstelle 6, 7 und das Stromnetzwerk 3 an den Server 5 des Stromanbieters beispielsweise mittels Power-Line-Kommunikation übertragen werden. Weiterhin ist es möglich, dass die Ladeschnittstelle 6, 7 zusätzlich eine Kommunikationsdatenverbindung zwischen dem Energiemanagementmodul 8 und der Elektrozapfsäule 2 beim Einstecken des Steckers 6 in die Stromdose 7 herstellt, wobei die Elektrozapfsäule 2 über ein separates Datennetzwerk mit dem Server 5 des Stromanbieters verbunden sein kann. Beim Einstecken des Steckers 6 in die Stromdose 7 der Elektrozapfsäule 2 können Abrechnungsinformationsdaten von verschiedenen Nutzer-Speicherkapazitäten 11-i innerhalb des Fahrzeugakkumulators 11 an den Server 5 des Stromanbieters übertragen werden, welcher die Daten auswertet. Bei einer möglichen Ausführungsform kann beispielsweise ein Fahrzeug 1 Strom bzw. Energie für verschiedene partitionierte Nutzer-Speicherkapazitäten 11-i innerhalb des Fahrzeugakkumulators 11 zu unterschiedlichen Konditionen von dem Stromanbieter des Stromnetzwerkes 3 beziehen. Ist beispielsweise die partitionierte Nutzer-Speicherkapazität 11A dem Fahrzeug 1, beispielsweise der Verbrauchseinheit 15, fest zugewiesen und wird die zweite partitionierte Nutzer-Speicherkapazität 11B dem Stromanbieter zum Zwischenspeichern seiner Energie zur Verfügung gestellt, kann der Fahrzeughalter des Fahrzeuges 1 bei einer möglichen Ausführungsform Strom bzw. Energie, die in der zweiten partitionierten Nutzer-Speicherkapazität 11B gespeichert ist, günstiger beziehen als Energie bzw. Strom, die in der ersten partitionierten Nutzer-Speicherkapazität 11A für ihn exklusiv gespeichert wird.

Bei einer möglichen Ausführungsform kann die in der partitionierten Nutzer-Speicherkapazität 11B zwischengespeicherte Energie von dem Fahrzeug 1 in das gleiche oder in ein anderes Energie- bzw. Stromnetz 3 zurückgespeist werden, beispielsweise wenn das Fahrzeug 1 an einem Parkplatz abgestellt wird und an eine Elektro-Zapfsäule 2 angeschlossen wird. Bei einer möglichen Ausführungsform wird bei der Stromabrechnung bzw. Verrechnung derjenige Infrastrukturbetreiber bzw. Stromanbieter, welcher die Energie ursprünglich in der zugehörigen partitionierten Nutzer-Speicherkapazität, beispielsweise der Nutzer-Speicherkapazität 11B, eingespeist hat, von einem anderen Infrastrukturbetreiber bzw. Stromanbieter kompensiert, der die zwischengespeicherte Energie nach Anschluss an die Elektrozapfsäule 2 nunmehr bereitgestellt bekommt. Bei einer möglichen Ausführungsform kann zusätzlich der Ladezeitpunkt und der aktuelle Energiepreis für die Abrechnung bzw. Verrechnung benutzt werden. Die Verrechnung kann durch einen Clearing-Server erfolgen.

Bei einer möglichen Ausführungsform weist das Energiemanagementmodul 8 einen Konfigurationsspeicher 19 auf, in dem Konfigurationsdaten abgelegt werden können. In dem Konfigurationsdatenspeicher 19 können beispielsweise als Konfigurationsdaten die Aufteilung der gesamten Speicherkapazität des Fahrzeugakkumulators 11 an die verschiedenen virtuellen Nutzer-Speicherkapazitäten gespeichert werden. Weiterhin können in dem Konfigurationsspeicher 19 Steuerregeln bzw. Steuerinformationen während einer Konfiguration gespeichert werden. Diese Steuerregeln bzw. diese Steuerpolicy kann beispielsweise für die verschiedenen partitionierten Nutzer-Speicherkapazitäten des Fahrzeugakkumulators 11 angeben, wann diese jeweils zu laden bzw. zu entladen sind. Beispielsweise kann eine Steuerungspolicy für eine partitionierte Nutzer-Speicherkapazität 11-1 des Fahrzeugakkumulators 11 angeben, dass diese partitionierte Nutzer-Speicherkapazität 11-i geladen wird, falls der aktuelle Strompreis eines jeweiligen Stromanbieters des Netzwerkes 3 unterhalb eines einstellbaren Schwellenwertes liegt. Eine weitere Möglichkeit für eine Steuerregel, welche in dem Konfigurationsspeicher 19 abgelegt ist, ist, dass die entsprechende partitionierte Nutzer-Speicherkapazität 11-i, welche beispielsweise zum Zwischenspeichern von Ladung eines Stromanbieters vorgesehen ist, nur entladen wird, falls der aktuelle Strompreis des Stromanbieters über einem bestimmten Schwellenwert liegt. Die Informationsdaten hinsichtlich eines aktuellen Strompreises kann das Energiemanagementmodul 8 beispielsweise über das Mobilfunkmodul 18 erhalten oder im Parkzustand von der Elektrozapfsäule 2 des Stromnetzes 3. Für jede partitionierte Nutzer-Speicherkapazität 11-i können eine oder mehrere Steuerregeln in dem Konfigurationsspeicher 19 abgelegt sein.

Beim Ladevorgang des Fahrzeugakkumulators 11 kann durch das Energiemanagementmodul 8 festgelegt sein, in welcher Reihenfolge die verschiedenen Nutzer-Speicherkapazitäten 11-i des Fahrzeugakkumulators 11 aufgeladen werden. Beispielsweise kann zuerst ein Hauptakkumulator bzw. eine für das Fahrzeug 1 vorgesehene partitionierte Nutzer-Speicherkapazität 11A solange geladen werden, bis diese partitionierte Nutzer-Speicherkapazität 11A einen bestimmten Ladezustand erreicht bevor ein oder mehrere weitere virtuelle Akkumulatoren bzw. Nutzer-Speicherkapazitäten aufgeladen werden.

Bei einer möglichen Ausführungsform ist jeder partitionierten Nutzer-Speicherkapazität bzw. jedem virtuellen Akkumulator eine eigene Sicherheits- bzw. Securityfunktionalität zugeordnet. Jede partitionierte Nutzer-Speicherkapazität 11-i verfügt dabei über eine eigene, vorzugsweise kryptographisch gesicherte, Partitionierungsidentität PART-ID. Anhand dieser Partitionierungsidentität können Abrechnungsinformationsdaten für das Laden und den Energiebezug dieses virtuellen Akkumulators 11-i bestimmt werden. Weiterhin verfügt jeder virtuelle Akkumulator bzw. jede partitionierte Nutzer-Speicherkapazität 11-i über eine gesicherte Stromabgabe und Stromeinspeisung, das heißt es wird durch das Energiemanagementmodul 8 die Stromabgabe und die Stromeinspeisung der partitionierten Nutzer-Speicherkapazität 11-i erfasst und in einem internen Speicher kryptographisch gesichert abgelegt. Dabei ist vorzugsweise ein Zähler (metering device) vorgesehen, der beispielsweise direkt in den Fahrzeugakkumulator 11 eingebaut sein kann. Dieser Zähler kann über eine integrierte Signaturfunktion verfügen, welche die Speicherdaten bzw. die Daten der partitionierten Nutzer-Speicherkapazitäten 11-i signiert und bei Bedarf, beispielsweise beim Umladen, zur Abrechnung nutzt.

Bei einer möglichen Ausführungsform authentisiert sich das Energiemanagementmodul 8 des Fahrzeuges 1 gegenüber der Elektrozapfsäule 2 des Netzwerkes 3. Dadurch ist es beispielsweise möglich, dass die Elektrozapfsäule 2 erkennt, um welches Fahrzeug 1 es sich handelt, insbesondere auch um welchen Fahrzeugtyp es sich handelt. Bei einer möglichen Ausführungsform kann die Elektrozapfsäule 2 die Konfigurationsdaten hinsichtlich der Partitionierung des Fahrzeugakkumulators 11 nach dem Einstecken des Steckers 6 in die Stromsteckdose 7 aus dem Konfigurationsspeicher 19 des Energiemanagementmoduls 8 auslesen. Die Elektrozapfsäule 2 erhält somit als Information, dass der Fahrzeugakkumulator 11 beispielsweise in zwei separate partitionierte Nutzer-Speicherkapazitäten 11A, 11B logisch getrennt ist. Weiterhin erhält die Elektrozapfsäule 2 beispielsweise die Information, dass die zweite partitionierte Nutzer-Speicherkapazität 11B zum Zwischenspeichern von Energie für einen bestimmten Stromanbieter zur Verfügung steht. Weiterhin kann die Elektrozapfsäule 2 auf diese Weise erfahren, wie groß die Ladekapazität der zum Zwischenspeichern zugewiesenen Nutzer-Speicherkapazität ist. Beispielsweise erkennt die Elektrozapfsäule anhand des Fahrzeugtyps des Fahrzeugs 1 bzw. anhand des Akkumulatortyps des Fahrzeugakkumulators 11 die zur Verfügung stehende Gesamtkapazität C des Fahrzeugakkumulators 11 und erhält zusätzlich als Information aus dem Konfigurationsspeicher 19, dass die zweite partitionierte Nutzer-Speicherkapazität 11B, die für den Stromanbieter zur Verfügung steht, 20% der Gesamtkapazität C beträgt. Hat der Fahrzeugakkumulator beispielsweise eine Gesamtkapazität von 10 Ah, so erfährt die Elektrozapfsäule 2 auf diese Weise, dass für die Zwischenspeicherung von Energie für den Stromanbieter 2 Ah zur Verfügung stehen. Diese Information über den zur Verfügung stehenden Speicherplatz kann an den entsprechenden Server 5 des Stromanbieters übertragen werden. Beispielsweise kann die Elektrozapfsäule 2 über ein separates Datennetzwerk 20 an den entsprechenden Server 5 des Stromanbieters angeschlossen sein. Bei diesem Datennetzwerk 20 kann es sich beispielsweise um das Internet handeln. Die IP-Adressen oder DNS-Namen der verschiedenen Stromanbieter sind beispielsweise in einem Adress-Datenspeicher der Elektrozapfsäule 2 abgelegt. Bei einer möglichen Ausführungsform sind in dem Fahrzeugakkumulator 11 des Fahrzeuges 1 verschiedene partitionierte Nutzer-Speicherkapazitäten für verschiedene Stromanbieter reserviert. Bei der in der Figur dargestellten Ausführungsform ist die Elektrozapfsäule 2 über das Datennetzwerk 20 mit einem Server 5 des Stromanbieters verbunden. Bei einer alternativen Ausführungsform verfügt die Elektrozapfsäule 2 ebenfalls über ein Mobilfunkmodul zur Verbindung mit einem Server 5 eines Stromanbieters.

Bei der in der Figur dargestellten Ausführungsform ist der Fahrzeugakkumulator 11 in dem Fahrzeug 1 eingebaut. Bei einer alternativen Ausführungsform kann der Fahrzeugakkumulator 11 des Fahrzeuges 1 auf einfache Weise ausgetauscht werden. Bei dieser Ausführungsform ist der Fahrzeugakkumulator 11 getrennt von dem Fahrzeug 1 durch die Elektrozapfsäule 2 auf- bzw. entladbar.

Bei einer möglichen Ausführungsform kann der Fahrzeugakkumulator 11 über ein integriertes Energiemanagementmodul 8 verfügen, d.h. bei dieser Ausführungsform ist das Energiemanagementmodul 8 in einem derartigen intelligenten Fahrzeugakkumulator 11 integriert.

Bei einer möglichen Ausführungsform verfügt jedes Fahrzeug 1 über mindestens zwei separate Fahrzeugakkumulatoren 11, wobei während des Fahrbetrieb des Fahrzeugs 1 einer der beiden Fahrzeugakkumulatoren sich zur Stromversorgung in dem Fahrzeug 1 befindet und der andere Fahrzeugakkumulator an einer Elektrozapfsäule 2 aufgeladen wird. Der Fahrer des Fahrzeugs 1 kann dann nach Bedarf die beiden Fahrzeugakkumulatoren austauschen.

Bei einer weiteren möglichen Ausführungsform verfügt jedes Fahrzeug 1 über eine eigene zugehörige Elektrozapfsäule 2. Bei dieser Ausführungsform kann sich das Energiemanagementmodul 8 auch innerhalb der Elektrozapfsäule 2 befinden.

Die Erfindung bietet die Möglichkeit, elektrische Energie, die in einem Stromnetz 3 durch mindestens einen Stromanbieter bereitgestellt wird, zu speichern, wobei die bereitgestellte elektrische Energie in dafür vorgesehene partitionierte Speicherkapazitäten von Fahrzeugakkumulatoren 11 verschiedener Fahrzeuge 1 zumindest teilweise zwischengespeichert werden kann. Die Partitionierung sowie die Lade- und Entladevorgänge für die jeweiligen partitionierten Speicherkapazitäten des Fahrzeugakkumulators 11 können unter Kontrolle eines Steuerprogramms erfolgen, das durch eine Berechnungseinheit, insbesondere einen Mikroprozessor, des Energiemanagementmoduls 8 ausgeführt wird. Dieses Steuerprogramm kann beispielsweise über eine Konfigurationsschnittstelle des Energiemanagementmoduls 8 in einem Programmspeicher des Energiemanagementmoduls 8 gespeichert bzw. geladen werden.

## Patentansprüche

1. Vorrichtung zum Speichern elektrischer Energie in einem Fahrzeug (1) mit mindestens
einem Fahrzeugakkumulator (11), der über eine Fahrzeugladeschnittstelle (6) des Fahrzeuges (1) an ein Stromnetz (3) anschließbar ist und eine Speicherkapazität zum Speichern elektrischer Energie aufweist,
wobei die Speicherkapazität des Fahrzeugakkumulators (11) für unterschiedliche Nutzer partitioniert ist, wobei ein Energiemanagementmodul (8) die Speicherkapazität des Fahrzeugakkumulators (11) logisch in verschiedene Nutzer-Speicherkapazitäten (11A, 11B) partitioniert, wobei das Energiemanagementmodul (8) Energiespeicherzellen des Fahrzeugakkumulators (11) adressiert.

2. Vorrichtung nach Anspruch 1,
wobei zwischen dem Fahrzeugakkumulator (11) und der Fahrzeug-Ladeschnittstelle (6) ein Energiemanagementmodul (8) vorgesehen ist.

3. Vorrichtung nach Anspruch 1 bis 2,
wobei jede Nutzer-Speicherkapazität des Fahrzeugakkumulators (11) über das Energiemanagementmodul (8) unabhängig von anderen Nutzer-Speicherkapazitäten des Fahrzeugakkumulators (11) über die Fahrzeug-Ladeschnittstelle (6) auf- oder entladbar ist.

4. Vorrichtung nach Anspruch 1 bis 3,
wobei die Nutzer-Speicherkapazitäten mindestens eine erste Speicherkapazität (11A) zum Speichern von elektrischer Energie für das Fahrzeug (1) und
eine zweite Speicherkapazität (11B) zum Zwischenspeichern von Energie für einen Stromanbieter aufweist.

5. Vorrichtung nach Anspruch 1 bis 4,
wobei das Energiemanagementmodul (8) die Nutzer-Speicherkapazitäten verschiedenen Nutzern zuordnet, wobei die Nutzer verschiedene Verbrauchseinheiten des Fahrzeugs (1), welche elektrische Energie verbrauchen,
verschiedene Personen, welche das Fahrzeug (1) fahren, und verschiedene Stromanbieter, welche elektrische Energie in dem Fahrzeugakkumulator (11) Zwischenspeichern, aufweist.

6. Vorrichtung nach Anspruch 1 bis 5,
wobei jede partitionierte Nutzer-Speicherkapazität des Fahrzeugakkumulators (11)
eine einstellbare virtuelle Speicherkapazität,
eine Partitionierungsidentität und
einen Ladezustand aufweist.

7. Vorrichtung nach Anspruch 6,
wobei das Energiemanagementmodul (8) den jeweiligen Ladezustand der Nutzer-Speicherkapazitäten des Fahrzeugakkumulators (11) überwacht.

8. Vorrichtung nach Anspruch 1 bis 7,
wobei die Fahrzeug-Ladeschnittstelle (6) an eine Elektrozapfsäule (2) des Stromnetzes (3) zum Laden und Entladen der partitionierten Nutzer-Speicherkapazitäten des Fahrzeugakkumulators (11) anschließbar ist.

9. Vorrichtung nach Anspruch 8,
wobei sich das Energiemanagementmodul (8) des Fahrzeuges (1) sich gegenüber der Elektrozapfsäule (2) authentisiert.

10. Vorrichtung nach Anspruch 1 bis 9,
wobei das Fahrzeug (1) mindestens einen Elektromotor (15) aufweist, dessen Motorsteuerung (13) über das Energiemanagementmodul (8) in einem Fahrbetrieb des Fahrzeuges (1) elektrische Energie aus einer zugehörigen partitionierten Nutzer-Speicherkapazität des Fahrzeugakkumulators (11), die für die Versorgung des Elektromotors (15) vorgesehen ist, bezieht.

11. Vorrichtung nach Anspruch 10,
wobei bei einem Bremsvorgang des Fahrzeuges (1) der Elektromotor (15) Bremsenergie in die zugehörige partitionierte Nutzer-Speicherkapazität des Fahrzeugakkumulators (11), die für die Versorgung des Elektromotors (15) vorgesehen ist, zurückspeist.

12. Energiespeichersystem mit einer Vielzahl von Speichervorrichtungen nach Anspruch 1 bis 11,
wobei das Stromnetz (3) von mindestens einem Stromanbieter mit elektrischer Energie versorgt wird und die in dem Stromnetz vorhandene Energie durch den Stromanbieter in partitionierte Nutzer-Speicherkapazitäten von Fahrzeugakkumulatoren (11) speicherbar ist.

13. Verfahren zum Speichern elektrischer Energie, die in einem Stromnetz (3) durch mindestens einen Stromanbieter bereitgestellt wird,
wobei die bereitgestellte elektrische Energie in dafür vorgesehene partitionierte Nutzer-Speicherkapazitäten von Fahrzeugakkumulatoren (11) zumindest teilweise zwischengespeichert wird, wobei ein Energiemanagementmodul (8) die Speicherkapazität des Fahrzeugakkumulators (11) logisch in verschiedene Nutzer-Speicherkapazitäten (11A, 11B) partitioniert, wobei das Energiemanagementmodul (8) Energiespeicherzellen des Fahrzeugakkumulators (11) adressiert.

## Claims

1. Device for the storage of electrical energy in a vehicle (1), with at least
one vehicle battery (11), which can be connected via a vehicle charging interface (6) of the vehicle (1) to a mains network (3) and has a storage capacity for the storage of electrical energy, wherein the storage capacity of the vehicle battery (11) is partitioned for different users, wherein an energy management module partitions the storage capacity of the vehicle battery (11) logically into different user storage capacities (11A, 11B), wherein the energy management module (8) addresses energy storage cells of the vehicle battery (11).

2. Device according to claim 1,
wherein an energy management module (8) is provided between the vehicle battery (11) and the vehicle charging interface (6).

3. Device according to claim 1 to 2,
wherein each user storage capacity of the vehicle battery (11) can be charged up or discharged via the energy management module (8), independently of other user storage capacities of the vehicle battery (11), via the vehicle charging interface (6).

4. Device according to claim 1 to 3,
wherein the user storage capacities have at least one first storage capacity (11A) for the storage of electrical energy for the vehicle (1) and a second storage capacity (11B) for the intermediate storage of energy for a power provider.

5. Device according to claim 1 to 4,
wherein the energy management module (8) allocates the user storage capacities to different users, wherein the users have different consumption units of the vehicle (1) which consume electrical energy, different persons who drive the vehicle (1), and different power providers which intermediately store electrical energy in the vehicle battery (11).

6. Device according to claim 1 to 5,
wherein each partitioned user storage capacity of the vehicle battery (11) has
an adjustable virtual storage capacity,
a partitioning identity, and
a charge state.

7. Device according to claim 6,
wherein the energy management module (8) monitors the individual charge state of the user storage capacities of the vehicle battery (11).

8. Device according to claim 1 to 7,
wherein the vehicle charging interface (6) can be connected to an electricity tapping column (2) of the mains network (3) for the charging and discharging of the partitioned user storage capacities of the vehicle battery (11).

9. Device according to claim 8,
wherein the energy management module (8) of the vehicle (1) authenticates itself to the electricity tapping column (2).

10. Device according to claim 1 to 9,
wherein the vehicle (1) has at least one electric motor (15), the engine management system (13) of which, in a travel operational mode of the vehicle (1), draws electrical energy via the energy management module (8) from a partitioned user storage capacity of the vehicle battery (11) pertaining to it, which is provided for the supply of the electric motor (15).

11. Device according to claim 10,
wherein, during a braking procedure of the vehicle (1), the electric motor (15) feeds braking energy back into the partitioned user storage capacity of the vehicle battery (11) pertaining to it, which is provided for the supply of the electric motor (15).

12. Energy storage system with a plurality of storage devices according to claim 1 to 11, wherein the mains network (3) is supplied with electrical energy by at least one power provider, and the energy present in the mains network can be stored by the power provider in partitioned user storage capacities of vehicle batteries (11).

13. Method for the storage of electrical energy which is provided in a mains network (3) by at least one power provider, wherein the electrical energy provided is at least partially intermediately stored in partitioned user storage capacities of vehicle batteries (11) provided for this purpose, wherein an energy management module (8) partitions the storage capacity of the vehicle battery (11) logically into different user storage capacities (11A, 11B), wherein the energy management module (8) addresses energy storage cells of the vehicle battery (11).

## Revendications

1. Dispositif pour le stockage d'énergie électrique dans un véhicule (1), avec au moins
un accumulateur de véhicule (11) qui peut être connecté à un réseau électrique (3) par l'intermédiaire d'une interface de charge de véhicule (6) du véhicule (1) et possède une capacité de stockage pour le stockage d'énergie électrique,
dans lequel la capacité de stockage de l'accumulateur de véhicule (11) est partitionnée pour différents utilisateurs, dans lequel un module de gestion d'énergie (8) partitionne de façon logique la capacité de stockage de l'accumulateur de véhicule (11) en différentes capacités de stockage d'utilisateurs (11A, 11B), dans lequel le module de gestion d'énergie (8) adresse des cellules de stockage d'énergie de l'accumulateur de véhicule (11).

2. Dispositif selon la revendication 1,
dans lequel est prévu un module de gestion d'énergie (8) entre l'accumulateur de véhicule (11) et l'interface de charge de véhicule (6).

3. Dispositif selon les revendications 1 à 2,
dans lequel chaque capacité de stockage d'utilisateur de l'accumulateur de véhicule (11) peut être chargée ou déchargée par l'intermédiaire du module de gestion d'énergie (8) indépendamment d'autres capacités de stockage d'utilisateurs de l'accumulateur de véhicule (11), par l'intermédiaire de l'interface de charge de véhicule (6).

4. Dispositif selon les revendications 1 à 3,
dans lequel les capacités de stockage d'utilisateurs possèdent au moins une première capacité de stockage (11A) pour le stockage d'énergie électrique pour le véhicule (1) et une deuxième capacité de stockage (11B) pour le stockage intermédiaire d'énergie pour un fournisseur d'électricité.

5. Dispositif selon les revendications 1 à 4,
dans lequel le module de gestion d'énergie (8) attribue les capacités de stockage d'utilisateurs à différents utilisateurs, les utilisateurs possédant différentes unités de consommation du véhicule (1) qui consomment de l'énergie électrique, comprenant différentes personnes qui conduisent le véhicule (1), et différents fournisseurs d'électricité qui stockent de façon intermédiaire de l'énergie électrique dans l'accumulateur de véhicule (11).

6. Dispositif selon les revendications 1 à 5,
dans lequel chaque capacité de stockage d'utilisateur partitionnée de l'accumulateur de véhicule (11) possède une capacité de stockage virtuelle réglable, une identité de partitionnement et un état de charge.

7. Dispositif selon la revendication 6,
dans lequel le module de gestion d'énergie (8) supervise l'état de charge de chacune des capacités de stockage d'utilisateurs de l'accumulateur de véhicule (11).

8. Dispositif selon les revendications 1 à 7,
dans lequel l'interface de charge de véhicule (6) peut être connectée à une borne de distribution d'électricité (2) du réseau électrique (3) pour la charge et la décharge des capacités de stockage d'utilisateurs partitionnées de l'accumulateur de véhicule (11).

9. Dispositif selon la revendication 8,
dans lequel le module de gestion d'énergie (8) du véhicule (1) s'authentifie à la borne de distribution d'électricité (2).

10. Dispositif selon les revendications 1 à 9,
dans lequel le véhicule (1) comprend au moins un moteur électrique (15) dont la commande de moteur (13), s'effectuant par l'intermédiaire du module de gestion d'énergie (8) lors d'une mise en service du véhicule (1), tire de l'énergie électrique d'une capacité de stockage d'utilisateur partitionnée correspondante de l'accumulateur de véhicule (11) qui est prévue pour l'alimentation du moteur électrique (15).

11. Dispositif selon la revendication 10,
dans lequel, lors d'un processus de freinage du véhicule (1), le moteur électrique (15) restitue l'énergie de freinage à la capacité de stockage d'utilisateur partitionnée correspondante de l'accumulateur de véhicule (11) qui est prévue pour l'alimentation du moteur électrique (15).

12. Système de stockage d'énergie avec une pluralité de dispositifs de stockage selon les revendications 1 à 11,
dans lequel le réseau électrique (3) est alimenté en énergie électrique par au moins un fournisseur d'électricité, et l'énergie disponible dans le réseau électrique peut être stockée par le fournisseur d'électricité dans des capacités de stockage d'utilisateurs partitionnées d'accumulateurs de véhicule (11).

13. Procédé pour le stockage d'énergie électrique qui est fournie dans un réseau électrique (3) par au moins un fournisseur d'électricité,
dans lequel l'énergie électrique fournie est au moins partiellement stockée de façon intermédiaire dans des capacités de stockage d'utilisateurs partitionnées d'accumulateurs de véhicule (11) prévues à cet effet, dans lequel un module de gestion d'énergie (8) partitionne de façon logique la capacité de stockage de l'accumulateur de véhicule (11) en différentes capacités de stockage d'utilisateurs (11A, 11B), dans lequel le module de gestion d'énergie (8) adresse des cellules de stockage d'énergie de l'accumulateur de véhicule (11).
